# EUROPÄISCHE PATENTSCHRIFT

(11) **EP 1 570 166 B1**
(45) Veröffentlichungstag und Bekanntmachung des Hinweises auf die Patenterteilung: **02.08.2006**
(21) Anmeldenummer: 03788796.5
(22) Anmeldetag: 17.11.2003
(51) Int. Cl.: F02D 41/22, F02D 41/14

(54) **VERFAHREN UND VORRICHTUNG ZUM BERWACHEN EINER STEUEREINRICH TUNG EINER BRENNKRAFTMASCHINE**
METHOD AND DEVICE FOR MONITORING A CONTROL UNIT OF AN INTERNAL COMBUSTION ENGINE
PROCEDE ET DISPOSITIF POUR SURVEILLER UN DISPOSITIF DE COMMANDE D'UN MOTEUR A COMBUSTION INTERNE

(30) Priorität: 13.12.2002 DE 10258426
(43) Veröffentlichungstag der Anmeldung: 07.09.2005
(73) Patentinhaber: SIEMENS AKTIENGESELLSCHAFT, 80333 München (DE)
(72) Erfinder: GEYER, Dirk, 93142 Maxhütte (DE); ZHANG, Hong, 93105 Tegernheim (DE)
(86) Internationale Anmeldenummer: PCT/DE2003/003794
(87) Internationale Veröffentlichungsnummer: WO 2004/055348

(56) Entgegenhaltungen:
- DE-A- 4 003 752
- DE-A- 19 725 567
- DE-C- 19 946 962
- US-A- 5 385 134

## Beschreibung

Die Erfindung betrifft ein Verfahren und eine Vorrichtung zum Überwachen einer Steuereinrichtung für eine Brennkraftmaschine.

Bei modernen Brennkraftmaschinen wird die Last statt über eine direkte Kopplung eines Fahrpedals mit einem die Last einstellenden Stellglied, wie einer Drosselklappe, elektronisch über ein entsprechendes Ansteuern des die Last einstellenden Stellglieds durch eine Steuereinrichtung der Brennkraftmaschine eingestellt. Fehler in einer derartigen Steuereinrichtung können zu einem ungewollten und einem unkontrollierbaren Beschleunigen des Fahrzeuges führen. Aus diesem Grund müssen diese Steuereinrichtungen zuverlässig überwacht werden.

Aus der EP 1 021 649 B1 ist ein Verfahren und eine Vorrichtung zum Überwachen einer Brennkraftmaschine bekannt, bei dem bzw. der ein Schätzwert der Kraftstoffmasse berechnet wird, die tatsächlich pro Arbeitsspiel in einen Zylinder der Brennkraftmaschine zugemessen wird. Der Schätzwert der Kraftstoffmasse wird abhängig von einer Luftzahl berechnet, die von einer in dem Abgastrakt der Brennkraftmaschine angeordneten Sauerstoffsonde ermittelt wird. Ein Schätzwert des indizierten Drehmoments an der Brennkraftmaschine wird abhängig von dem Schätzwert der Kraftstoffmasse berechnet. Ein Notlauf der Brennkraftmaschine wird gesteuert wenn der Schätzwert und ein Sollwert des indizierten Drehmoments eine vorgegebene Bedingung erfüllen. Ein derartiges Überwachungskonzept ist besonders geeignet für Brennkraftmaschinen, die mit sehr magerem Gemisch betrieben werden, d. h. mit einem Luftverhältnis dass wesentlich größer als eins ist. Zur Durchführung dieses Verfahrens wird eine lineare Lambdasonde benötigt, eine kostengünstige Zwei-Punkt-Lambdasonde kommt hierfür nicht in Frage.

Damit führt dieses Verfahren insbesondere bei Brennkraftmaschinen, die mit stöchiometrischen Luft-Kraftstoff-Verhältnis betrieben werden, zu unerwünscht hohen Kosten.

Aus der WO 00/52319 ist ein Verfahren zur Diagnose eines Kraftstoffversorgungssystems einer Brennkraftmaschine bekannt. Abhängig von dem Ausgang einer Prüfung, ob ein Ausgangssignal einer Lambdaregelung über eine vorbestimmte Zeit größer ist als ein vorbestimmter Schwellenwert wird ein dauerhafter Fehler von Hochdruckeinspritzventilen der Brennkraftmaschine erkannt.

Aus der DE 198 57 183 A1 ist ein Verfahren zur Überprüfung der Funktionsfähigkeit einer variablen Ventilsteuerung bei einem Verbrennungsmotor bekannt. Ein Hauptlastsignal ist ein Messsignal eines Luftmassenmessers. Ein Nebenlastsignal wird aus einem Öffnungswinkel einer Drosselklappe im Saugrohr abgeleitet. Die Funktionsfähigkeit der variablen Ventilsteuerung wird auf der Basis eines Vergleichs von Hauptlast- und Nebenlastsignal beurteilt.

Aus der DE 42 43 493 A1 ist ein Verfahren bekannt, bei dem in stationären Betriebszuständen ausgehend von dem Drehzahlsignal und einem die eingespritzte Kraftstoffmenge angebenden Signal der erwartete Wert für das Ausgangssignal der Lambdasonde vorgegeben wird. Und ein Fehler erkannt wird, wenn der erwartete Wert für das Ausgangssignal der Lambdasonde um mehr als ein Schwellenwert von dem gemessenen Wert der Lambdasonde abweicht.

Aus der DE 40 03 752 ist ein Verfahren bekannt, bei dem mittels eines von einer Lambdasonde abgegebenen Signals bei einer Abweichung des Sondensignals um mehr als einen Schwellenwert, die Abweichung demjenigen Zylinder der Brennkraftmaschine zugeordnet dessen Abgas die Lambdasonde gerade erfasst hat.

Aus der DE 197 25 567 A1 ist bekannt einen Luft/Kraftstoff-Verhältnis-Korrekturkoeffizienten gemäß der Differenz zwischen dem Luft/Kraftstoff-Verhältnis und dem Soll-Luft/Kraftstoff-Verhältnis zu bilden. Ein Fehler eines Luft/Kraftstoff-Verhältnis-Sensors oder eines Mikroprozessors wird erkannt auf Grundlage eines Fehlerentscheidungselements, welches aus dem Luft/Kraftstoff-Verhältnis, bestimmt durch den Luft/Kraftstoff-Verhältnis-Sensor und dem Luft/Kraftstoff-Verhältnis-Korrekturkoeffizienten abgeleitet wird.

Aus der DE 199 46 962 C1 ist es bekannt bei magerem Betrieb einer Brennkraftmaschine eine Plausibilisierungsprüfung durchzuführen. Diese beinhaltet, dass abgefragt wird, ob die von einer Lambdasonde im Abgastrakt angezeigte Abgaszusammensetzung einem Kraftstoff/Luft-Gemisch entspricht, das außerhalb eines vorgegebenen Betriebsfensters liegt. Bei Unplausibilitäten wird auf stöchiometrischen Betrieb der Brennkraftmaschine umgeschaltet, in dem eine Lambda-Regelung aktiv ist. Es erfolgt dann eine Drehmomentüberwachung, bei der ein Ist-Drehmoment mittels einer angesaugten Verbrennungsluftmasse über ein Kennfeld ermittelt wird. Ferner wird das vom Steuergerät angeforderte Soll-Drehmoment erfasst. Überschreitet die Differenz zwischen dem Soll- und dem Ist-Drehmoment einen Schwellenwert, so wird die Brennkraftmaschine auf einen Notlaufbetrieb umgeschaltet.

Die Aufgabe der Erfindung ist es, ein einfaches und gleichzeitig zuverlässiges Verfahren zum Überwachen einer Steuereinrichtung für eine Brennkraftmaschine zu schaffen.

Die Aufgabe wird gelöst durch die Merkmale der unabhängigen Patentansprüche.

Die Erfindung zeichnet sich dadurch aus, dass ein ausreichend sicherer Betrieb der Steuereinrichtung möglich ist ohne die Stellglieder für den Luftpfad überwachen zu müssen. Dies ist insbesondere bei modernen Motorkonzepten ein entscheidender Vorteil, da diese häufig über mehrere Stellglieder für die Einstellung der Luftmasse verfügen, wie z.B. Drosselklappen, variablen Ventiltrieb und Turbolader. Es kann somit bei diesen Stellgliedern darauf verzichtet werden, jeweils redundant ausgelegte Sensoren vorzusehen.

In einer vorteilhaften Ausgestaltung der Erfindung ist die Größe, die charakteristisch ist für den Ausgangsparameter einer Lambda-Regelung, der Ausgangsparameter selbst. Dadurch ist das Überwachen besonders einfach und gleichzeitig auch präzise durchführbar.

Weitere vorteilhafte Ausgestaltungen der Erfindung sind in den Unteransprüchen gekennzeichnet.

Ausführungsbeispiele der Erfindung werden im Folgenden anhand der schematischen Zeichnungen erläutert. Es zeigen:
- Figur 1: ein Blockschaltbild einer Steuereinrichtung für eine Brennkraftmaschine und einer Vorrichtung zum Überwachen einer Steuereinrichtung,
- Figur 2: den ersten Teil eines Ablaufprogramms einer ersten Ausführungsform, eines Programms zum Überwachen der Steuereinrichtung,
- Figur 3: einen zweiten Teil eines Ablaufdiagramms einer Ausführungsform des Programms zum Überwachen der Steuereinrichtung,
- Figur 4: den zweiten Teil eines Ablaufdiagramms einer weiteren Ausführungsform des Programms zum Überwachen der Steuereinrichtung,
- Figur 5: den ersten Teil eines Ablaufdiagramms einer weiteren Ausführungsform eines Programms zum Steuern der Brennkraftmaschine und
- Figur 6: einen ersten Teil eines Ablaufdiagramms einer weiteren Ausführungsform eines Programms zum Steuern der Brennkraftmaschine.

Elemente gleicher Konstruktion und Funktion sind figurenübergreifend mit den gleichen Bezugszeichen gekennzeichnet.

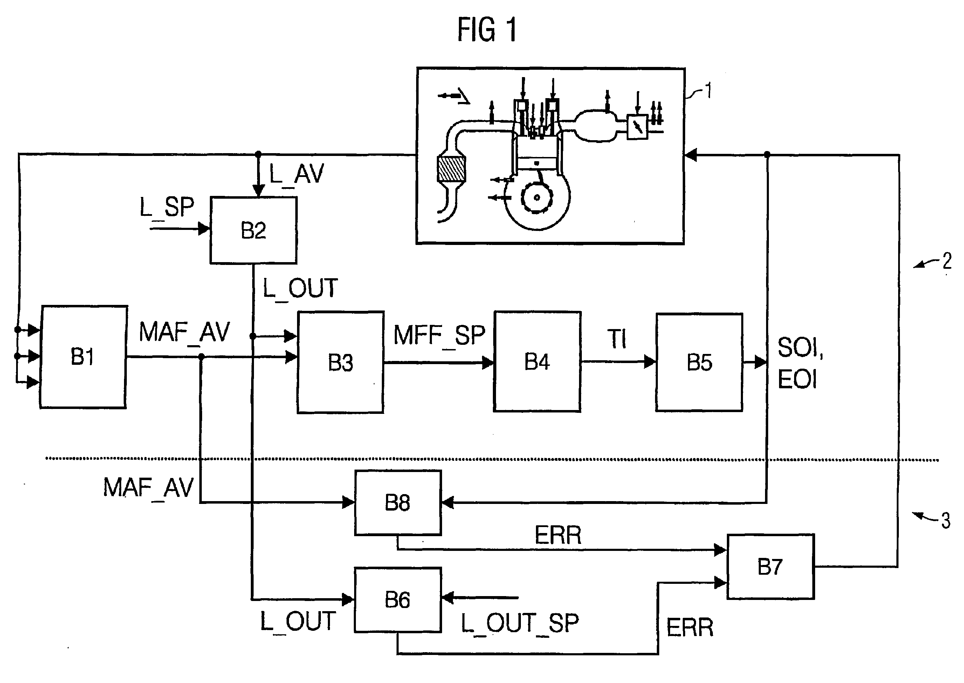

Figur 1 zeigt eine schematische Darstellung einer Brennkraftmaschine 1, der eine Steuereinrichtung 2 und eine Überwachungseinrichtung 3 zugeordnet sind. Die Brennkraftmaschine 1 hat einen Ansaugtrakt mit einem Sammler, von dem Saugrohre zu den jeweiligen Zylindern geführt sind. In der Figur ist lediglich ein Zylinder beispielhaft dargestellt. Ferner ist ein Kolben vorgesehen, der über eine Pleuelstange mit einer Kurbelwelle gekoppelt ist. Ein Abgastrakt der Brennkraftmaschine umfasst vorzugsweise einen Katalysator.

Der Steuereinrichtung 2 sind Sensoren zugeordnet, die verschiedene Messgrößen erfassen und jeweils den Messwert der Messgröße ermitteln. Die Steuereinrichtung 2 ermittelt abhängig von den Messgrößen Stellsignale für Stellglieder der Brennkraftmaschine.

Die Sensoren sind ausgebildet als ein Kurbelwellensensor, der einen Kurbelwellenwinkel der Kurbelwelle erfasst oder aus dessen zeitlichen Verlauf eine Drehzahl N ableitet, ein Luftmassensensor, der einen Luftmassenstrom erfasst, ein Drosselklappensensor, der einen Öffnungsgrad der Drosselklappe erfasst, ein Kraftstoff-Drucksensor, welcher einen Kraftstoffdruck FUP erfasst, eine Abgassonde, welche ein Abgas/Luftverhältnis erfasst, von dem dann das Luftverhältnis in den Zylindern der Brennkraftmaschine abgeleitet wird und einen Saugrohrdrucksensor, welcher den Druck im Sammler und den Saugrohren des Ansaugtrakts erfasst. Je nach Ausführungsform der Erfindung kann eine beliebige Untermenge der genannten Sensoren oder auch zusätzliche Sensoren vorhanden sein.

Als Stellglieder sind Einspritzventile, Zündkerzen, die Drosselklappe und auch weitere die Füllung in den Zylindern beeinflussende Stellglieder, wie Gaswechselventile und zugehörige Verstellmechanismen, ein Turbolader oder ein Abgasrückführventil vorgesehen. Daneben können auch weitere Stellglieder vorgesehen sein, deren Einsatz für Brennkraftmaschinen bekannt ist.

In einem Block B1 wird ein Istwert MAF AV des Luftmassenstroms in die Zylinder der Brennkraftmaschine 1 ermittelt. Dies erfolgt entweder unmittelbar aus dem Messwert des Luftmassenmessers, vorzugsweise wird der Istwert MAF_AV des Luftmassenstroms jedoch mittels eines dynamischen Modells des Ansaugtraktes abhängig von verschiedenen Betriebsgrößen der Brennkraftmaschine ermittelt, die ihrerseits wieder direkt oder mittelbar von den der Brennkraftmaschine zugeordneten Sensoren erfasst werden. Maßgebliche Betriebsgrößen für ein derartiges Saugrohrmodell sind beispielsweise der Öffnungsgrad der Drosselklappe und die Drehzahl N.

In einem Block B2 ist ein Lambda-Regler vorgesehen, welcher abhängig von einem Istwert L_AV des Luftverhältnisses, welcher aus dem Messsignal der Abgassonde abgeleitet ist, und einem Sollwert L_SP des Luftverhältnisses ein Ausgangsparameter L_OUT ermittelt. Der Lambda-Regler kann dabei beispielsweise als P-, PI-, oder PID-Regler ausgebildet sein, wobei der Ausgangsparameter L_OUT auch noch von zusätzlichen Korrekturgrößen beeinflusst sein kann. Der Sollwert L_SP des Luftverhältnisses ist dabei typischerweise für ein stöchiometrisches Gemisch vorgegeben und beträgt somit etwa eins.

In einem Block B3 wird abhängig von dem Istwert MAF_AV des Luftmassenstroms und dem Ausgangsparameter L_OUT des Lambdareglers ein Sollwert MFF_SP des Kraftstoffmassenstroms ermittelt.

In einem Block B4 wird dann abhängig von dem Sollwert MFF_SP des Kraftstoffmassenstroms eine Einspritzzeitdauer TI ermittelt. In einem Block B5 wird dann abhängig von der Einspritzzeitdauer ein Einspritzbeginnsignal SOI und ein Einspritzendesignal EOI ermittelt und in Endstufen der Steuereinrichtung erzeugt. Mit diesem Einspritzbeginn- und Einspritzendesignalen SOI, EOI werden dann die Einspritzventile der Brennkraftmaschine angesteuert.

Die Steuereinrichtung weist vorzugsweise eine drehmomentbasierte Steuerstruktur auf, d. h. die Ansteuerung der Stellglieder der Brennkraftmaschine hängt dem vom Fahrer gewünschten Drehmoment ab, das abhängig von der Stellung eines Fahrpedals ermittelt wird. Das Drehmoment wird dann einerseits über entsprechende Ansteuerung der Stellglieder eingestellt, welche den Luftmassenstrom in die Zylinder beeinflussen, und andererseits über die wesentlich dynamischeren Stellglieder, wie die Einspritzventile und die Zündkerzen.

Eine Überwachungsvorrichtung 3 ist vorgesehen, welche den Betrieb der Steuereinrichtung überwacht. Dazu hat die Überwachungseinrichtung Zugriff auf einzelne oder mehrere Messgrößen, die von den Sensoren erfasst werden und auf intern in der Steuereinrichtung 2 ermittelten Betriebs- und Rechengrößen. Die Steuereinrichtung 2 und die Überwachungseinrichtung 3 können in einem gemeinsamen Gehäuse angeordnet seind.

Der von der Steuereinrichtung 2 ermittelte Istwert MAF_AV des Luftmassenstroms wird beispielsweise herangezogen zum Überwachen des Sollwertes TQI_SP des an der Brennkraftmaschine einzustellenden Drehmoments. Dazu wird beispielsweise abhängig von dem Istwert MAF_AV des Luftmassenstroms ein Istwert des Drehmoments, das von der Brennkraftmaschine erzeugt wird, ermittelt. Dieser Istwert wird dann mit dem Sollwert TQI_SP verglichen und eine Fehlerreaktion ausgeführt, wenn der Istwert um einen vorgegebenen Schwellenwert größer ist als der Sollwert TQI_SP.

In einer ersten Ausführungsform der Überwachungsvorrichtung 3 ist ein Block B6 vorgesehen, welchem der Ausgangsparameter L_OUT des Lambdareglers und ein Sollwert L_OUT_SP des Ausgangsparameters des Lambdareglers zugeführt werden. Abhängig von diesen beiden Werten wird in dem Block B6, dann ein Fehlermerker ERR gesetzt, wenn ein Fehler in der Steuereinrichtung 2 erkannt wurde. Das genaue Vorgehen diesbezüglich wird anhand der folgenden Figuren noch näher erläutert. In einem Block B7 wird dann abhängig von dem Fehlermerker ERR ein Notlauf der Brennkraftmaschine gesteuert, der darin bestehen kann, dass die Ansteuerung der Stellglieder so begrenzt wird, dass keine gefährlichen Fahrzeugreaktionen auftreten können.

In einer anderen Ausführungsform der Überwachungseinrichtung 3 ist ein Block B8 vorgesehen, welchem der Istwert MAF_AV des Luftmassenstroms und das Einspritzbeginnsignal SOI und das Einspritzendesignal EOI zugeführt werden. In diesem Block B8 werden dann abhängig von diesen Größen der Fehlermerker ERR gesetzt, wenn ein Fehler in der Steuereinrichtung 2 erkannt wurde. Das genaue Vorgehen diesbezüglich wird im Folgenden anhand der weiteren Figuren näher erläutert.

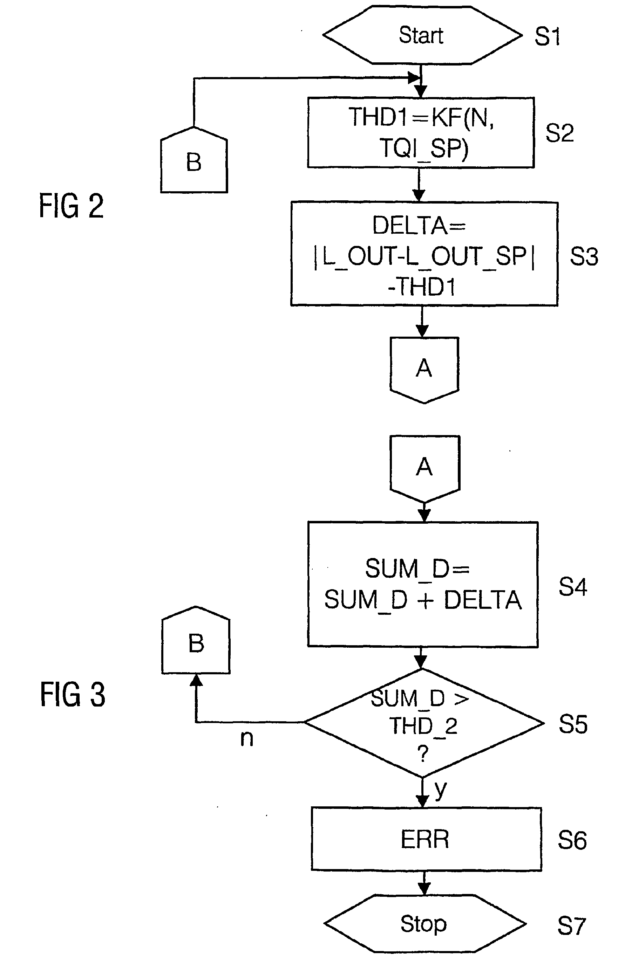

In einem Schritt S1 (Figur 2) wird ein Programm gestartet, welches in dem Block B8 abgearbeitet wird.

In einem Schritt S2 wird ein erster Schwellenwert THD1 aus einem Kennfeld abhängig von der Drehzahl N und einem Sollwert TQI_SP des Drehmoments ermittelt. Die Werte des Kennfelds sind dabei vorzugsweise durch Fahrversuche oder durch Versuche an einem Motorprüfstand ermittelt und sind vorzugsweise so appliziert, dass sie bezogen auf die Drehzahl von der unteren Drehzahlgrenze, d. h. Null Umdrehungen pro Minute bis zu einer unteren Drehzahlschwelle, von beispielsweise 1500 Umdrehungen, sich verringern und dies beispielsweise linear und anschließend im Bereich zwischen der unteren Drehzahlschwelle und einer oberen Drehzahlschwelle von beispielsweise 4000 Umdrehungen pro Minute auf einen niedrigen Wert bleiben um dann bei hin zu den sehr hohen Drehzahlen wieder anzusteigen. In Bezug auf den Sollwert TQI_SP des Drehmoments ist das Kennfeld vorzugsweise so bedatet, dass die zugehörigen ersten Schwellwerte THD1 im Bereich des geringen bis zu einem höheren Drehmoment, das beispielsweise 3/4 des maximal erreichbaren Drehmoments erreichen kann sehr niedrig gewählt sind und dann hin zu dem maximal erreichbaren Drehmoment stark ansteigen. In einer einfacheren Ausgestaltung kann der erste Schwellenwert aber auch fest vorgegeben sein.

In einem Schritt S3 wird eine Abweichung DELTA ermittelt. Aus der Differenz zum einen des Betrages der Differenz des Ausgangsparameters L_OUT und des Sollwerts L_OUT_SP des Ausgangsparameters des Lambdareglers und zum anderen des ersten Schwellwertes THD1.

Durch die Ermittlung des ersten Schwellwertes THD1 aus dem Kennfeld abhängig von den Lastgrößen Drehzahl N und Sollwert TQI_SP des Drehmoments kann mit der oben angegebenen Bedatung gewährleistet werden, dass sich in Betriebsbereichen mit hoher Lastdynamik die Abweichungen des Ausgangsparameters L_OUT und seines zugeordneten Sollwertes L_OUT_SP stärker ins Gewicht fallen als in Bereichen mit geringerer Lastdynamik, in welchen der erste Schwellenwert entsprechend höher gewählt ist. Der gleiche Vorteil kann auch erreicht werden, wenn der erste Schwellenwert abhängig von einem anderen Lastparameter, wie beispielsweise dem Saugrohrdruck ermittelt wird. Im Anschluss an den Schritt S3 wird die Bearbeitung in dem Schritt fortgesetzt, der auf den Verknüpfungspunkt A folgt.

In einem Schritt S4 (siehe Figur 3) wird eine summierte Abweichung SUM_D durch Hinzuaddieren der Abweichung DELTA ermittelt. In einem Schritt S5 wird anschließend geprüft, ob die summierte Abweichung SUM_D größer ist als ein zweiter vorgegebener Schwellenwert THD_2. Ist dies nicht der Fall so wird nach ggf. einer vorgegebenen Wartezeit die Bearbeitung erneut dem Schritt S2 fortgesetzt. Ist die Bedingung des Schrittes S5 jedoch erfüllt, so wird in einem Schritt S6 der Fehlermerker ERR gesetzt. In einem Schritt S7 wird das Programm dann beendet.

Das Vorgehen gemäß der Schritte S4 und S5 hat den Vorteil, dass auf sehr einfache Weise kurzzeitige Ausfälle im Bereich der Steuereinrichtung nicht zu einer Fehlerreaktion, d. h. das Setzen des Fehlermerkers ERR führen, allerdings je stärker die Auswirkung des Ausfalls auf eine drehmomentkritische Größe ist, desto schneller erfolgt dann auch eine Reaktion. Das anhand der Figuren 2 und 3 beschriebene Vorgehen zeichnet sich darüber hinaus dadurch aus, dass anhand der Werte des Ausgangsparameters L_OUT der Lambdaregelung auf einfache und zuverlässige Weise ein Fehler an einem die Luftmasse in den Zylindern bestimmenden Stellglied erkannt werden kann. Dabei müssen dazu nicht alle Stellglieder und insbesondere die diesen zugeordneten Positionssensoren überwacht und plausibilisiert werden, da anhand des Ausgangsparameters L_OUT jede beliebige Abweichung zwischen der eigentlich beabsichtigten Luftmenge in die Zylinder und der tatsächlich zugemessenen Luftmenge sicher erkannt werden kann. Durch dieses Vorgehen ist sichergestellt, dass eine Fehlerreaktion erfolgt bevor bei einer weiteren Fehlfunktion im Bereich der Steuereinrichtung ungewollt starke Beschleunigungen des Fahrzeugs auftreten können und dieses dann unkontrollierbar werden kann.

Eine derartige Fehlfunktion kann beispielsweise sein, dass einerseits der Istwert MAF_AV des Luftmassenstroms niedriger ist als der tatsächlich in den Zylinder strömende Luftmassenstrom, was dann bei der Überwachung des Sollwerts des Drehmoments TQI_SP nicht zu einer Fehlerreaktion führen würde, und andererseits bei einem in der Steuereinrichtung fehlerhaft berechneten zu hohen Öffnungsgrad der Drosselklappe zu einer Erhöhung der tatsächlich in die Zylinder der Brennkraftmaschine strömende Luftmasse führen würde. Dies wiederum würde dazu führen, dass der Lambdaregler im Block B2 einen entsprechend hohen Wert des Ausgangsparameters L_OUT in dem Block B3 zur Verfügung stellen würde was wiederum zu einer starken Erhöhung des Sollwertes MFF_SP des Kraftstoffmassenstroms in die Zylinder führen würde. Dieses würde dann zu einer plötzlich sehr starken Drehmomenterhöhung an der Kurbelwelle der Brennkraftmaschine führen, welche mittels der Überwachung des Sollwertes TQI_SP des Drehmoments ggf. nicht erkannt werden würde.

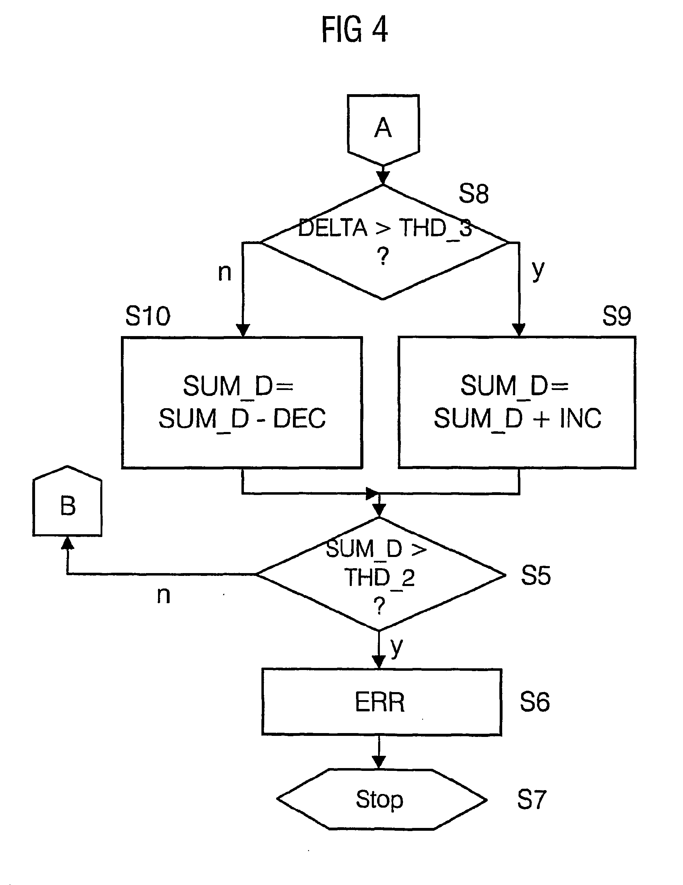

In der Ausführungsform des Programms gemäß Figur 4 wird nach dem Schritt S3 gemäß Figur 2 das Verfahren in einem Schritt S8 fortgesetzt, in dem geprüft wird, ob die Abweichung DELTA größer ist als ein vorgegebener dritter Schwellenwert THD_3. Ist dies der Fall, so wird in einem Schritt S9 die summierte Abweichung SUM_D um einen vorgegebenen Inkrementwert INC erhöht. Ist der Bedingung des Schritts S8 jedoch nicht erfüllt, so wird in einem Schritt S10 die summierte Abweichung um einen Dekrementwert DEC verringert. Die Schritte S5, S6 und S7 entsprechen denen gemäß Figur 3. Bei geeigneter Wahl des ersten Schwellenwertes THD_1 kann der dritte Schwellenwert beispielsweise einfach den Wert null haben.

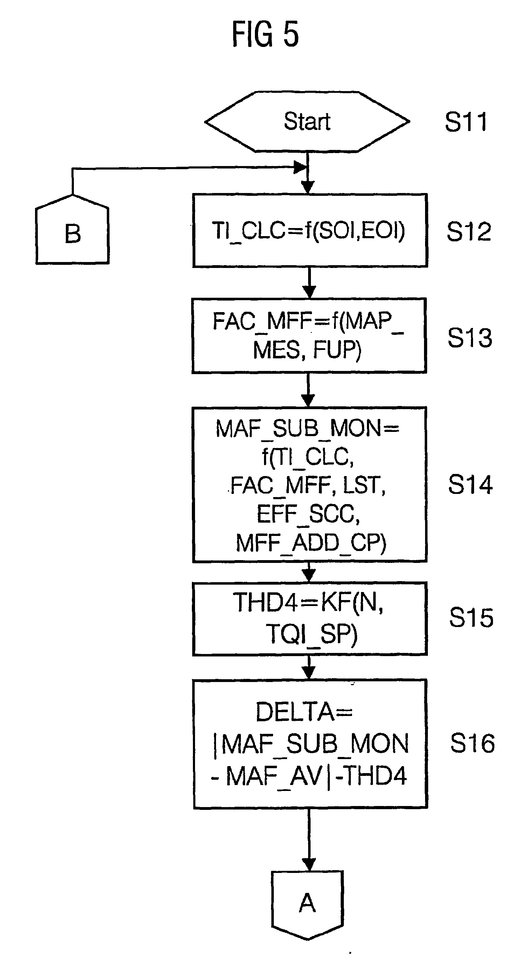

In einer weiteren Ausführungsform wird das Programm in einem Schritt S11 (siehe Figur 5) gestartet. In einem Schritt S12 wird eine berechnete Einspritzzeitdauer TI_CLC abhängig von dem Einspritzbeginnsignal SOI oder dem Einspritzendesignal EOI ermittelt.

In einem Schritt S13 wird anschließend ein Kraftstoff-Massenstrom-Korrekturwert FAC_MFF abhängig von einem Messwert MAP_MES eines Saugrohrdrucks und einem Kraftstoffdruck FUP ermittelt. In einem Schritt S14 wird ein Überwachungswert MAF_SUB_MON des Luftmassenstroms abhängig von der errechneten Einspritzzeitdauer TI_TLC, dem Kraftstoff-Massenstrom-Korrekturwert FAC_MFF, der stöchiometrischen Luftzahl LST (14,7), einem Zylinderabschaltungs-Wirkungsgrad EFF_SCC und einem Tankentlüftungs-Korrekturwert MFF_ADD_CP und ggf. weiteren Größen ermittelt.

In einem Schritt S15 wird dann ein vierter Schwellenwert THD4 aus einem Kennfeld abhängig von der Drehzahl N und dem Sollwert TQI_SP des Drehmoments ermittelt. Die Bedatung des Kennfelds gemäß Schritt S15 wird dabei entsprechend der des Kennfelds gemäß Schritt S2 ermittelt.

Anschließend wird in einem Schritt S16 die Abweichung DELTA aus der Differenz zum einen des Betrages der Differenz des Überwachungswertes MAF_SUB_MON des Luftmassenstroms und des Istwertes MAF_AV des Luftmassenstroms und andererseits des vierten Schwellwertes THD4 ermittelt. Anschließend wird dann die Bearbeitung in den dem Verknüpfungspunkt A zugeordneten Schritt fortgesetzt. Das Vorgehen gemäß Figur 5 zeichnet sich einerseits dadurch aus, dass der Überwachungswert MAF_SUB_MON einfach und mit von der Steuereinrichtung ohnehin berechneten Wert berechenbar ist und darüber hinaus auch noch Berechnungsfehler der Steuereinrichtung 2 in den Blöcken B3, B4, B5 frühzeitig und einfach erkannt werden können.

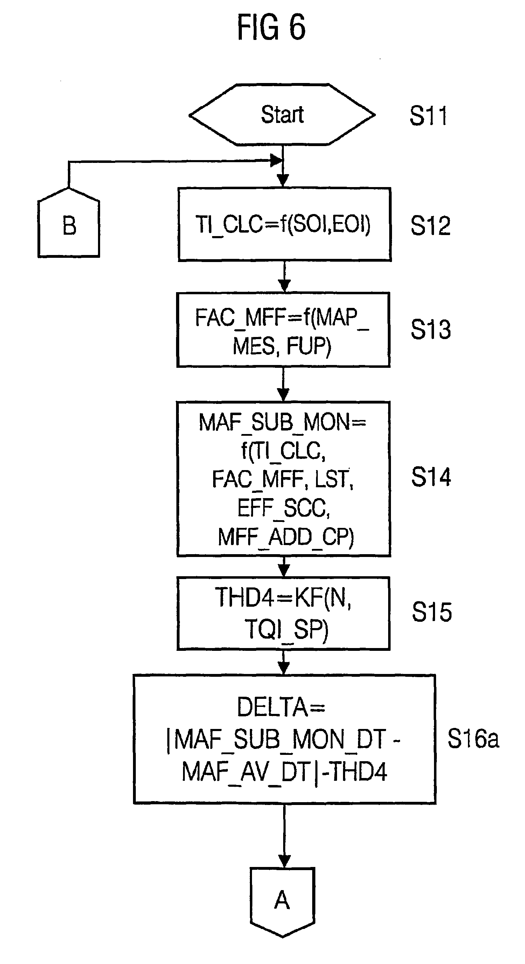

Eine weitere Ausführungsform des Programms unterscheidet sich von der gemäß Figur 5 dadurch, dass in einem Schritt S16a (siehe Figur 6) die Abweichung DELTA statt mit dem Überwachungswert MAF_SUB_MON des Luftmassenstroms mit dessen zeitlicher Ableitung MAF_SUB_MON_DT und statt des Istwertes MAF_AV des Luftmassenstroms mit der zeitlichen Ableitung des Istwertes MAF_AV_DT ermittelt werden. Dieses Vorgehen zeichnet sich durch seine geringe Anforderung an die statische Genauigkeit aus, was eine vereinfachte Umsetzung in der Überwachungseinrichtung 3 und eine hohe Robustheit gewährleistet.

Entsprechend des Schrittes S16a in Figur 6 kann auch in dem Schritt S3 in Figur 2 jeweils die zeitlichen Ableitungen des Ausgangsparameters L_OUT und des Sollwertes L_OUT_SP des Ausgangsparameters zur Ermittlung der Abweichung DELTA herangezogen werden, wobei sich die oben beschriebenen Vorteile ebenfalls ergeben.

Alternativ zu den beschriebenen Ausführungsformen kann auch zur Ermittlung der Abweichung DELTA eine andere Größe herangezogen werden, die charakteristisch ist für den Ausgangsparameter L_OUT der Lambdaregelung. Dafür kommt insbesondere der Sollwert MFF_SP und die Einspritzzeitdauer TI entsprechend in Frage, wenn dabei jeweils der Einfluss des Ausgangsparameters L_OUT berücksichtigt ist.

Ein Referenzwert kann beispielsweise der vorgegebene Sollwert (L_OUT_SP) des Ausgangsparameters der Lambdaregelung oder der Iswert (MAF_AV) des Luftmassenstroms sein.

## Patentansprüche

1. Verfahren zum Überwachen einer Steuereinrichtung für eine Brennkraftmaschine,
bei dem eine Größe, die charakteristisch ist für den Ausgangsparameter einer Lambda-Regelung auf eine Abweichung von einem vorgegebenen Referenzwert überwacht wird und
abhängig von der festgestellten Abweichung ein Fehler an einem die Luftmasse in dem Zylinder bestimmenden Stellglied erkannt wird.

2. Verfahren nach Anspruch 1, **dadurch gekennzeichnet, dass** die Größe, die charakteristisch ist für den Ausgangsparameter einer Lambda-Regelung, der Ausgangsparameter (L_OUT) ist.

3. Verfahren nach Anspruch 2, **dadurch gekennzeichnet, dass** die Abweichung des Werts des Ausgansparameters (L_OUT) mit einem vorgegebenen Sollwert (L_OUT_SP) des Ausgangsparameters verglichen wird, die Abweichung summiert wird und ein Fehler erkannt wird, wenn die summierte Abweichung (DELTA) einen vorgegebenen Schwellenwert (THD_2) überschreitet.

4. Verfahren nach Anspruch 3, **dadurch gekennzeichnet, dass** von dem Betrag der Abweichung ein weiterer Schwellenwert (THD_1) abgezogen wird und anschließend diese korrigierte Abweichung summiert wird, wobei der weitere Schwellenwert (THD_1) abhängig von zumindest einer Lastgröße der Brennkraftmaschine ermittelt wird.

5. Verfahren nach Anspruch 4, **dadurch gekennzeichnet, dass** die Lastgröße das Drehmoment der Brennkraftmaschine und die Drehzahl (N) sind.

6. Verfahren nach Anspruch 1, **dadurch gekennzeichnet, dass** die Größe, die charakteristisch ist für den Ausgangsparameter einer Lambda-Regelung, abhängt von der zeitlichen Ableitung des Ausgangsparameters (L_OUT) der Lambda-Regelung.

7. Verfahren nach Anspruch 1, **dadurch gekennzeichnet, dass** die Größe, die charakteristisch ist für den Ausgangsparameter (L_OUT) einer Lambda-Regelung, ein aus Einspritzparametern ermittelter Wert eines Luftmassenstroms in die Zylinder der Brennkraftmaschine ist.

8. Verfahren nach Anspruch 7, **dadurch gekennzeichnet, dass** der aus Einspritzparametern ermittelte Wert des Luftmassenstroms abhängig von einem Einspritzbeginn- und Einspritzendesignal (SOI, EOI) ermittelt wird, die von der Steuereinrichtung (2) erzeugt werden.

9. Verfahren nach Anspruch 7 oder 8, **dadurch gekennzeichnet, dass** die Abweichung des aus Einspritzparametern ermittelten Wertes des Luftmassenstroms mit einem Istwert (MAF_AV) des Luftmassenstroms verglichen wird, die Abweichung summiert wird und ein Fehler erkannt wird, wenn die summierte Abweichung (DELTA) einen vorgegebenen Schwellenwert (THD_2) überschreitet.

10. Verfahren nach Anspruch 8, **dadurch gekennzeichnet, dass** von dem Betrag der Abweichung ein weiterer Schwellenwert (THD_4) abgezogen wird und anschließend diese korrigierte Abweichung summiert wird, wobei der weitere Schwellenwert (THD_4) abhängig von zumindest einer Lastgröße der Brennkraftmaschine ermittelt wird.

11. Verfahren nach Anspruch 9, **dadurch gekennzeichnet, dass** die Lastgröße das Drehmoment der Brennkraftmaschine und die Drehzahl (N) sind.

12. Verfahren nach Anspruch 1, **dadurch gekennzeichnet, dass** die Größe, die charakteristisch ist für den Ausgangsparameter einer Lambda-Regelung, abhängt von einem aus Einspritzparametern ermittelten Wert eines Luftmassenstroms in die Zylinder der Brennkraftmaschine.

13. Vorrichtung zum Überwachen einer Steuereinrichtung für eine Brennkraftmaschine,
mit einer Überwachungseinheit (B6,B7,B8), die eine Größe, die charakteristisch ist für den Ausgangsparameter einer Lambda-Regelung auf eine Abweichung von einem vorgegebenen Schwellenwert überwacht und abhängig von der festgestellten Abweichung einen Fehler an einem die Luftmasse in dem Zylinder bestimmenden Stellglied erkennt.

## Claims

1. Method for monitoring a control unit of an internal combustion engine,
according to which a variable, which characterizes the output parameter of a lambda regulation system, is monitored for a deviation from a predefined reference value and an error is detected as a function of the deviation that has been determined at a control element defining the air mass in the cylinder.

2. Method according to claim 1, **characterized in that** the variable which characterizes the output parameter of a lambda regulation system is the output parameter (L_OUT).

3. Method according to claim 2, **characterized in that** the deviation of the value of the output parameter (L_OUT) is compared with a predefined setpoint value (L_OUT_SP) of the output parameter, the deviation is summed and an error is detected if the summed deviation (DELTA) exceeds a predefined threshold value (THD_2).

4. Method according to claim 3, **characterized in that** from the amount of the deviation a further threshold value (THD_1) is deducted and this corrected deviation is then summed in which case the other threshold value (THD_1) is determined as a function of at least one load variable of the internal combustion engine.

5. Method according to claim 4, **characterized in that** the load variable is the torque of the internal combustion engine and the rotational speed (N).

6. Method according to claim 1, **characterized in that** the variable which characterizes the output parameter of a lambda regulation system depends on the derivation in time of the output parameter (L_OUT) of the lambda regulation system.

7. Method according to claim 1, **characterized in that** the variable which characterizes the output parameter (L_OUT) of a lambda regulation system is a value of an air mass flow determined from the injection parameters in the cylinders of the internal combustion engine.

8. Method according to claim 7, **characterized in that** the value of the air mass flow determined from the injection parameters is determined as a function of a start of injection and end of injection signal (SOI, EOI) which are generated by the control unit (2).

9. Method according to claim 7 or 8, **characterized in that** the deviation of the value of the air mass flow determined from the injection parameters is compared with an actual value (MAF_AV) of the air mass flow, the deviation is summed and an error is detected if the summed deviation (DELTA) exceeds a predefined threshold value (THD_2).

10. Method according to claim 8, **characterized in that** a further threshold value (THD_4) is deducted from the amount of the deviation and this corrected deviation is then summed in which case the other threshold value (THD_4) is determined as a function of at least one of the load variables of the internal combustion engine.

11. Method according to claim 9, **characterized in that** the load variable is both the torque of the internal combustion engine and the rotational speed (N).

12. Method according to claim 1, **characterized in that** the variable which characterizes the output parameter of a lambda regulation system depends on a value of an air mass flow determined from injection parameters in the cylinders of the internal combustion engine.

13. Device for monitoring a control unit for an internal combustion engine,
with a monitoring unit (B6, B7, B8) according to which a variable, which characterizes the output parameter of a lambda regulation system, is monitored for a deviation from a predefined threshold value and an error is detected as a function of the deviation that has been determined at a control element defining the air mass in the cylinder.

## Revendications

1. Procédé de surveillance d'un appareil de commande de moteur à combustion interne,selon lequel une grandeur caractéristique du paramètre de sortie d'une régulation lambda est surveillée relativement à un écart par rapport à une valeur de référence prédéterminée et suivant l'écart constaté un défaut d'un élément de commande déterminant la masse d'air dans le cylindre est détecté.

2. Procédé selon la revendication 1 **caractérisé par le fait que** la grandeur caractéristique du paramètre de sortie d'une régulation lambda est le paramètre de sortie (L_OUT).

3. Procédé selon la revendication 2, **caractérisé par le fait que** l'écart de la valeur du paramètre de sortie (L_OUT) est comparé à une valeur nominale prédéterminée du paramètre de sortie (L_OUT_SP), que l'écart est totalisé, et une erreur est détectée lorsque l'écart totalisé (DELTA) dépasse un seuil prédéterminé (THD_2).

4. Procédé selon la revendication 3, **caractérisé par le fait qu'**un autre seuil (THD_1) est soustrait de la valeur de l'écart, puis que cet écart corrigé est totalisé tandis que l'autre seuil (THD_1) est calculé en fonction d'au moins une grandeur de charge du moteur à combustion.

5. Procédé selon la revendication 4, **caractérisé par le fait que** la grandeur de charge est constituée du couple de rotation du moteur à combustion et de la vitesse de rotation (N).

6. Procédé selon la revendication 1, **caractérisé par le fait que** la grandeur caractéristique du paramètre de sortie d'une régulation lambda dépend de la dérivée temporelle du paramètre de sortie de la régulation lambda (L_OUT).

7. Procédé selon la revendication 1, **caractérisé par le fait que** la grandeur caractéristique du paramètre de sortie d'une régulation lambda (L_OUT) est une valeur du flux de la masse d'air admis dans les cylindres du moteur à combustion calculée à partir des paramètres d'injection.

8. Procédé selon la revendication 7, **caractérisé par le fait que** la valeur du flux de la masse d'air calculée à partir des paramètres d'injection est calculée en fonction d'un signal de début d'injection et d'un signal de fin d'injection (SOI, EOI), lesquels sont générés par l'appareil de commande (2).

9. Procédé selon la revendication 7 ou 8, **caractérisé par le fait que** l'écart de la valeur du flux de la masse d'air calculée à partir des paramètres d'injection est comparé à une valeur réelle du flux de la masse d'air (MAF_AV), que l'écart est totalisé, et une erreur est détectée lorsque l'écart totalisé (DELTA) dépasse un seuil prédéterminé (THD_2).

10. Procédé selon la revendication 8, **caractérisé par le fait qu'**un autre seuil (THD_4) est soustrait de la valeur de l'écart, puis que cet écart corrigé est totalisé tandis que l'autre seuil (THD_4) est calculé en fonction d'au moins une valeur de charge du moteur à combustion.

11. Procédé selon la revendication 9, **caractérisé par le fait que** la grandeur de charge est constituée du couple de rotation du moteur à combustion et de la vitesse de rotation (N).

12. Procédé selon la revendication 1, **caractérisé par le fait que** la grandeur caractéristique du paramètre de sortie d'une régulation lambda dépend d'une valeur du flux de la masse d'air admis dans les cylindres du moteur à combustion calculée à partir de paramètres d'injection.

13. Dispositif de surveillance d'un appareil de commande de moteur à combustion interne, équipé d'un boîtier de surveillance (B6, B7,B8) surveillant l'écart d'une grandeur caractéristique du paramètre de sortie d'une régulation lambda par rapport à un seuil prédéterminé et détectant suivant l'écart constaté un défaut d' un élément de commande déterminant la masse d'air admise dans le cylindre.
